# EUROPEAN PATENT APPLICATION

(11) **EP 4 546 437 A1**
(43) Date of publication of application: **30.04.2025**
(21) Application number: 23827464.1
(22) Date of filing: 19.06.2023
(51) Int. Cl.: H01M 4/04, F26B 3/04, F26B 13/08, F26B 13/10, F26B 25/06, F26B 3/28, F26B 21/00, H01M 4/02

(54) **HYBRID DRYING SYSTEM FOR MANUFACTURING SECONDARY BATTERY ELECTRODE**

(30) Priority: 23.06.2022 KR 20220077126; 12.04.2023 KR 20230048382; 26.04.2023 KR 20230054912
(71) Applicant: SFA Engineering Corp., Hwaseong-si, Gyeonggi-do 18472 (KR)
(72) Inventor: JOO, Kang Wo, Cheonan-si Chungcheongnam-do 31079 (KR); CHAE, Ho Chol, Hwaseong-si Gyeonggi-do 18442 (KR); HAN, Kyung Roc, Hwaseong-si Gyeonggi-do 18443 (KR); LEE, Jong Chan, Hwaseong-si Gyeonggi-do 18429 (KR); LIM, Yong Hwan, Hwaseong-si Gyeonggi-do 18429 (KR); YOON, Hyung Seok, Seongnam-si Gyeonggi-do 13525 (KR); CHOI, Kyo Won, Asan-si Chungcheongnam-do 31417 (KR)
(74) Representative: Patentanwälte Hemmer Lindfeld Frese Partnerschaft mbB
(86) International application number: PCT/KR2023/008443
(87) International publication number: WO 2023/249348

(57) **Abstract**

Provided is an orthogonal-axis power transmission device. The orthogonal-axis power transmission device according to an embodiment of the present inventive concept includes: a main structure assembly forming an exterior structure and having a space portion formed therein, the space portion being sealed; an input shaft assembly connected to one side of the main structure assembly, and to which rotational power of a motor is input; an output shaft assembly connected to the other side of the main structure assembly intersecting the input shaft assembly, and from which the rotational power of the motor is output; and a link assembly for changing a power transmission direction arranged to operate in the space portion of the main structure assembly to prevent propagation of noise or vibration, connected to the input shaft assembly and the output shaft assembly within the main structure assembly by a link method, and changing the power transmission direction from the input shaft assembly to the output shaft assembly.

## Description

### TECHNICAL FIELD

The present inventive concept relates to a hybrid drying system for manufacturing a secondary battery electrode, and more particularly, to a hybrid drying system for manufacturing a secondary battery electrode, which may safely and stably perform a drying process on metal foil of a secondary battery electrode and also realize high-speed drying, thereby improving productivity.

### BACKGROUND ART

Secondary batteries have many advantages, such as high energy density, high operating voltage, and excellent preservation and life properties, and thus have been widely used not only in various portable electronic devices, such as personal computers, camcorders, mobile phones, portable CD players, PDAs, etc., but also in electric vehicles.

Examples of secondary batteries include nickel-cadmium batteries, nickel-hydrogen batteries, and lithium batteries. Lithium secondary batteries can be manufactured to have higher energy density and longer lifespan than other types of secondary batteries, and thus are used in many fields.

A lithium secondary battery has a case filled with an electrolyte and an electrode assembly accommodated in the case. The electrode assembly is a stack of an anode, a separator, and a cathode, and has a jelly-roll-shaped winding structure or α stack structure.

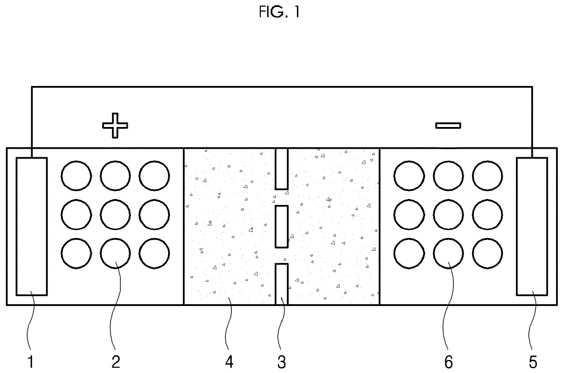

Looking at the principle of the lithium secondary battery with reference to FIG. 1, lithium ions contained in anode active material 2 of the anode with an anode substrate 1 pass through a separator 3 by an electrolyte 4 composed of an organic solvent, move to the cathode with a cathode substrate 5, and are then inserted into cathode active material 6 having a layered structure, which is referred to as charging. Discharge refers to generation of electricity by utilizing a flow of electrons occurring when the lithium ions inserted into the cathode active material 6 move back to the anode through the separator 3.

In order to improve the performance of secondary batteries, it is necessary to improve the efficiency of electrochemical reactions, and to this end, a lot of research has been conducted, such as electrode material changes, electrode surface coating, cleaning, and thick film technology.

Meanwhile, a process for manufacturing electrodes of these secondary batteries is a series of manufacturing processes in which electrode slurry mixed with an active material and a conductive agent is applied to a current collector made of a metal component, dried at a high temperature, and then pressed. Hereinafter, the current collector is referred to as metal foil (Meta Foil).

In order to properly perform the secondary battery electrode manufacturing process, it is necessary to stably attach an active material layer, that is, slurry, on the metal foil.

In order to improve battery characteristics by reducing internal resistance during this process, an electrode drying process that removes solvent (or α solvent component) of the applied slurry must be carried out under appropriate conditions. In particular, a proper electrode drying process is most important for improving the quality of secondary battery electrodes.

Accordingly, in order to proceed with this electrode drying process, conventionally, heated air has been blown into a drying oven through an electric heater or a gas boiler to dry the slurry applied to the metal foil. However, such a classical simple method causes various problems, such as additional installation of various equipment for hot air injection, duct structures, etc., in addition to the drying oven. If the length of the drying oven is longer than several tens of meters, problems, such as installation space issues, complex structural problems, cost problems, excessive energy consumption problems, etc., may inevitably arise

Therefore, there is a growing need for a drying device that can reduce the length of existing drying lines of up to tens of meters, while improving energy efficiency and further realizing high-speed drying.

### DESCRIPTION OF EMBODIMENTS

### TECHNICAL PROBLEM

It is an objective of the present inventive concept to provide a hybrid drying system for manufacturing a secondary battery electrode, which may safely and stably perform a drying process for metal foil (Meta Foil) of a secondary battery electrode and also realize high-speed drying, thereby improving productivity.

### ADVANTAGEOUS EFFECTS OF DISCLOSURE

According to the present inventive concept, a drying process for metal foil (Meta Foil) of a secondary battery electrode may be safely and stably performed, and also, high-speed drying may be realized so as to improve productivity.

### BRIEF DESCRIPTION OF DRAWINGS

FIG. 1 is a schematic structural diagram of a general secondary battery.
FIG. 2 is a configuration view of a hybrid drying system for manufacturing a secondary battery electrode, according to a first embodiment of the present inventive concept.
FIG. 3 is an enlarged view of main parts of FIG. 2.
FIG. 4 is a process diagram of FIG. 2.
FIG. 5 is an enlarged view of the main parts of FIG. 2, showing a portion of a hot air drying furnace chamber.
FIG. 6 is an enlarged view of a unit mounting operation portion of FIG. 5.
FIG. 7 is a usage state diagram of FIG. 6.
FIG. 8 illustrates a state in which a high-speed drying unit is mounted in the unit mounting operation portion of FIG. 5.
FIG. 9 is a control block diagram of a hybrid drying system for manufacturing a secondary battery electrode, according to the first embodiment of the present inventive concept.
FIGS. 10 and 11 are different application examples of the high-speed drying unit.
FIG. 12 is a configuration view of a hybrid drying system for manufacturing a secondary battery electrode, according to a second embodiment of the present inventive concept.
FIG. 13 is an enlarged view of main parts of FIG. 12.
FIG. 14 is a process diagram of FIG. 12.
FIG. 15 is an enlarged view of main parts of FIG. 13, which is an enlarged view of a unit external mounting portion area.
FIG. 16 is a process diagram showing that a high-speed drying unit is applied to FIG. 15.
FIG. 17 is a control block diagram of the hybrid drying system for manufacturing a secondary battery electrode of FIG. 12.
FIGS. 18 and 19 are different application examples of a high-speed drying unit.
FIG. 20 is a cross-sectional structural view showing a flow path of first and second ducts.
FIG. 21 is an enlarged view of a unit external mounting portion area in a hybrid drying system for manufacturing a secondary battery electrode, according to a third embodiment of the present inventive concept.
FIG. 22 is a process diagram showing that the high-speed drying unit is applied to FIG. 21.
FIG. 23 is a cross-sectional structural view showing a flow path of first and second ducts applied to FIG. 21.
FIG. 24 illustrates a modified example of a flow path of first and second ducts illustrated in FIG. 23.
FIG. 25 is a structural view of a unit external mounting portion area in a hybrid drying system for manufacturing a secondary battery electrode, according to a fourth embodiment of the present inventive concept.

### BEST MODE

According to an aspect of the present inventive concept, there is provided a hybrid drying system for manufacturing a secondary battery electrode, the hybrid drying system including a hot air drying furnace chamber forming a place for hot air drying of slurry applied to metal foil (Meta Foil) forming a secondary battery electrode, a hot air supply and exhaust portion provided in the hot air drying furnace chamber, and supplying hot air to the metal foil moving inside the hot air drying furnace chamber to dry the metal foil and exhausting the hot air used during drying, and a unit mounting operation portion provided in the hot air drying furnace chamber, wherein a predetermined high-speed drying unit performing high-speed drying for the metal foil in the hot air drying furnace chamber is mounted in the unit mounting operation portion and operates.

The unit mounting operation portion may include a unit mounting portion that is provided in the hot air drying furnace chamber and forms a place in which the high-speed drying unit is mounted.

The unit mounting portion may include a unit external mounting portion that allows the high-speed drying unit to be mounted outside the hot air drying furnace chamber.

The unit mounting operation portion may further include a heat source penetration window provided on a wall body of the hot air drying furnace chamber in the unit external mounting portion and guiding a heat source of the high-speed drying unit toward the metal foil in the hot air drying furnace chamber, and an opening shield portion that shields an opening of the unit external mounting portion.

The unit external mounting portion may be formed by a portion processed in a form of groove in one side of the hot air drying furnace chamber, and the opening shield portion may detachably shield the opening of the unit external mounting portion from outside the unit external mounting portion.

The heat source penetration window may include an inner window neighboring the metal foil in the hot air drying furnace chamber, an outer window forming a gap with the inner window and arranged to neighbor the high-speed drying unit, and a window cap supporting the inner window and the outer window to be coupled at corresponding positions.

The unit mounting operation portion may further include a cooling fluid flowing portion that is connected to the heat source penetration window in the hot air drying furnace chamber and allows a cooling fluid to flow through a gap between the inner and outer windows that form the heat source penetration window.

The cooling fluid flowing portion may include a cooling fluid supply duct connected to one side of the heat source penetration window and supplying the cooling fluid through the gap between the inner and outer windows that form the heat source penetration window, and a cooling fluid discharge duct connected to the other side of the heat source penetration window and discharging the cooling fluid coming out through the gap between the inner and outer windows that form the heat source penetration window.

The hot air drying furnace chamber may include a lower chamber, and an upper chamber detachably coupled to an upper portion of the lower chamber, the unit mounting operation portion may be provided in the upper chamber, and a plurality of rollers for moving the metal foil may be arranged in the hot air drying furnace chamber.

The hot air supply and exhaust portion may include a lower supply tank arranged in the lower chamber and including a lower hot air nozzle through which hot air is supplied from below, a plurality of lower exhaust ducts arranged around the lower supply tank in the lower chamber and exhausting the hot air in the lower chamber toward the lower chamber, an upper supply tank arranged in the upper chamber and including an upper hot air nozzle through which hot air is supplied from above, and a plurality of upper exhaust ducts arranged around the upper supply tank in the upper chamber and exhausting the hot air in the upper chamber toward the upper chamber.

The lower supply tank, the lower exhaust ducts, the upper supply tank, and the upper exhaust ducts may each be arranged in plural numbers in the hot air drying furnace chamber, and a foil inlet, through which the metal foil before drying is input, may be formed in one side of the hot air drying furnace chamber and a foil outlet, through which the metal foil that has been dried is discharged, may be formed in the other side thereof.

The hybrid drying system may further include a system controller configured to control, in an organic mechanism, operations of the hot air supply and exhaust portion and the high-speed drying unit, for automatic progress of a drying process for the metal foil in the hot air drying furnace chamber.

The high-speed drying unit may be selected from among an NIR laser unit, an intense pulsed light (IPL) unit, and an IR lamp unit.

The hybrid drying system may further include an explosive substance forced discharge portion that is provided in an area of the unit mounting operation portion and forcibly discharges, to outside, an explosive substance generated during the high-speed drying for metal foil.

The explosive substance forced discharge portion may include a first duct extending from one side area of the unit mounting portion toward the metal foil and then bent in an end portion area parallel to the metal foil, and including a first flow path, along which air flows, formed therein, and a second duct provided symmetrically to the first duct in the other side area of the unit mounting portion, and including a second flow path, along which air flows, formed therein.

The first flow path or the second flow path may be formed as an integrated opening.

The explosive substance forced discharge portion may further include a forced convection device that is connected to the first duct and generates forced convection toward the first flow path.

The explosive substance forced discharge portion may further include a capturing device that is connected to the second duct and captures foreign materials in air discharged through the second flow path.

During operations of the forced convection device and the capturing device, forced convection may be performed at the height that does not affect an electrode from the first flow path of the first duct through the second flow path of the second duct so that the explosive substance is forcibly discharged to outside.

The slurry may include cathode material slurry.

### MODE OF DISCLOSURE

In order to fully understand the present inventive concept, its operational advantages of the present inventive concept, and the objects achieved by practicing the present inventive concept, reference should be made to the accompanying drawings illustrating preferred embodiments of the present inventive concept and the contents described in the accompanying drawings.

Hereinafter, an embodiment of the present inventive concept is described in detail with reference to the accompanying drawings. Throughout the drawings, like reference numeral denote like elements.

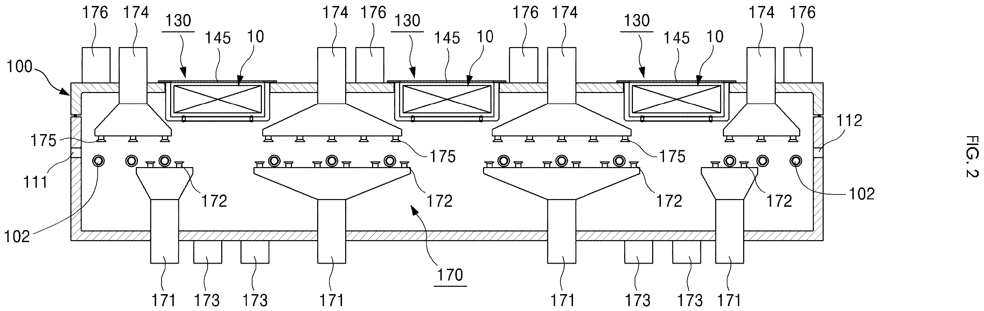

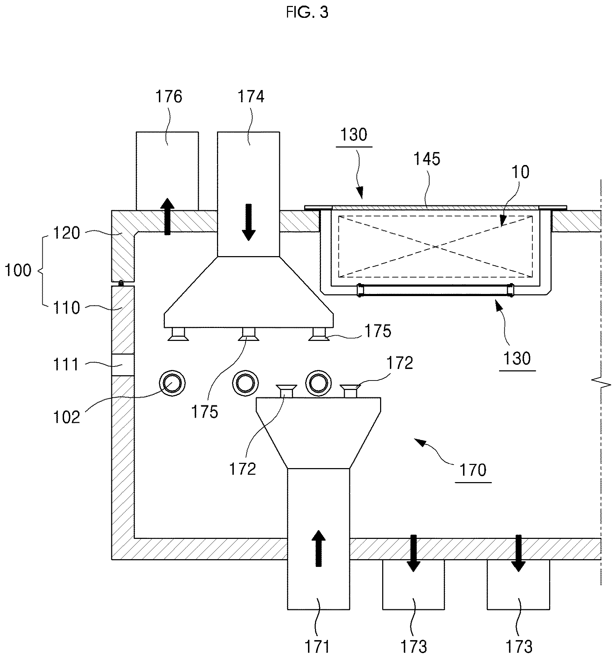

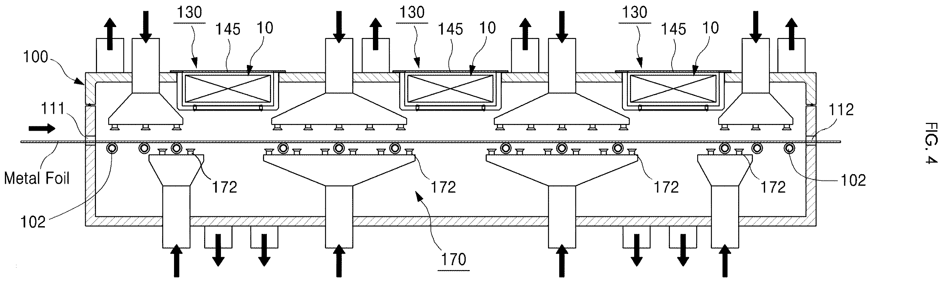

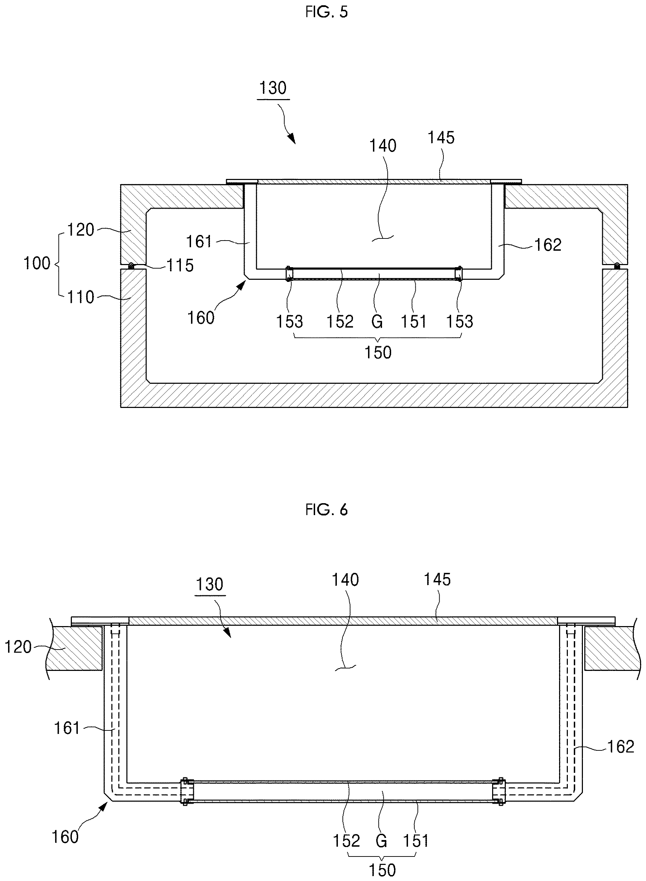

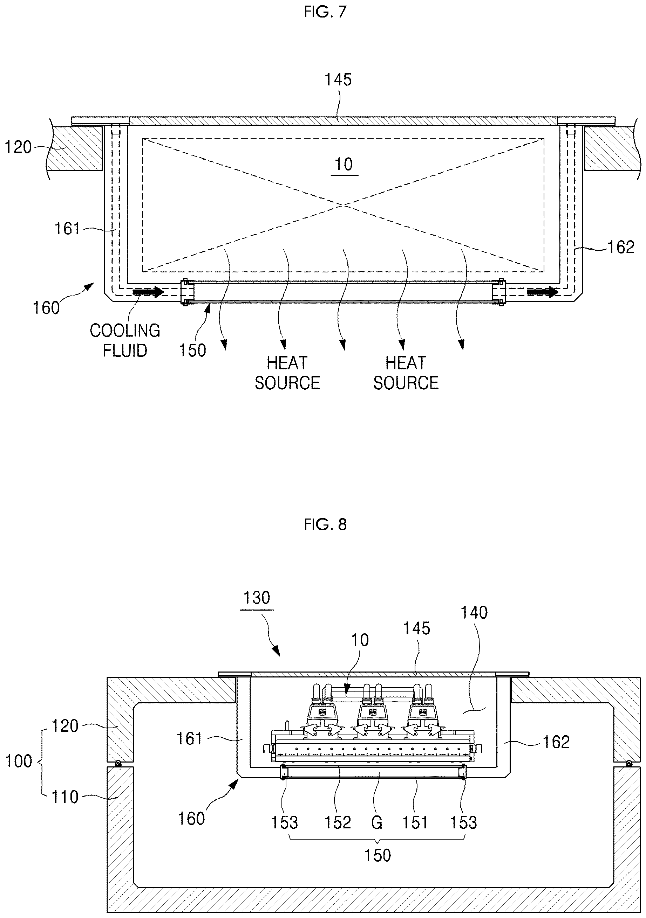

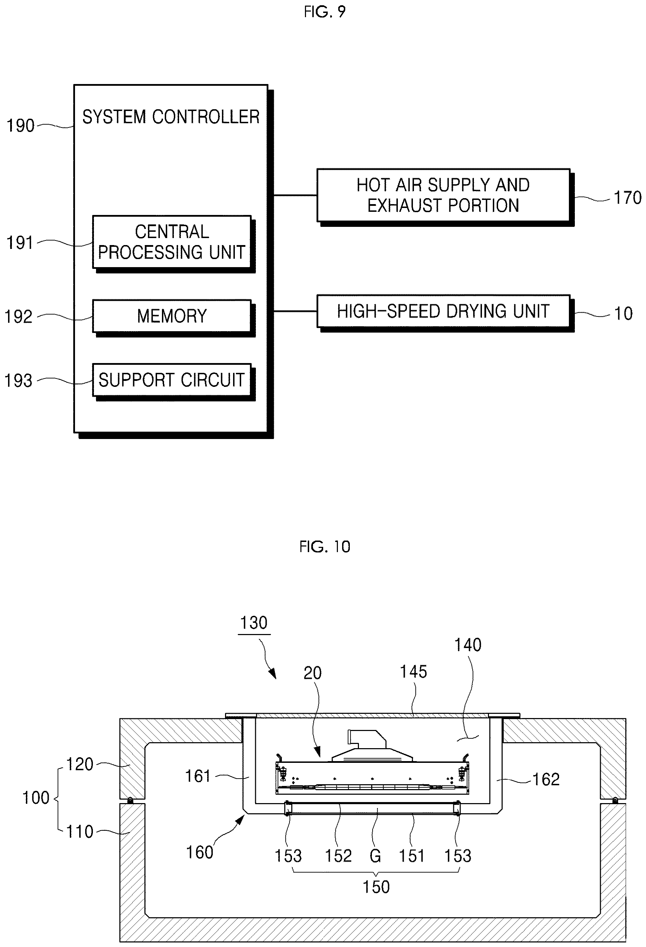

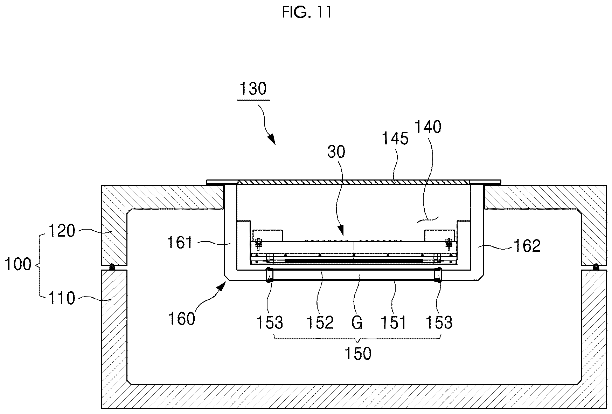

FIG. 2 is a configuration view of a hybrid drying system for manufacturing a secondary battery electrode, according to a first embodiment of the present inventive concept. FIG. 3 is an enlarged view of main parts of FIG. 2. FIG. 4 is a process diagram of FIG. 2. FIG. 5 is an enlarged view of the main parts of FIG. 2, showing a portion of a hot air drying furnace chamber. FIG. 6 is an enlarged view of a unit mounting operation portion of FIG. 5. FIG. 7 is a usage state diagram of FIG. 6. FIG. 8 illustrates a state in which a high-speed drying unit is mounted in the unit mounting operation portion of FIG. 5. FIG. 9 is a control block diagram of a hybrid drying system for manufacturing a secondary battery electrode, according to the first embodiment of the present inventive concept. FIGS. 10 and 11 are different application examples of the high-speed drying unit.

Referring to the drawings, a hybrid drying system for manufacturing a secondary battery electrode, according to the present embodiment, may safely and stably perform a drying process for metal foil (Meta Foil) of a secondary battery electrode and also realize high-speed drying, thereby improving productivity.

As described above, an electrode process for manufacturing an electrode of a secondary battery is a series of manufacturing processes of applying electrode slurry mixed with an active material and a conductive agent onto a current collector that is a material of a metal component, drying the applied electrode slurry in a high temperature state, and pressing the dried slurry. Here, the current collector that is a material of a metal component corresponds to the metal foil in the present embodiment. The metal foil includes an aluminum (A) or copper (Cu) material.

The electrode slurry mixed with an active material and a conductive agent applied to the metal foil needs to be dried in a high temperature state. In this state, the hybrid drying system for manufacturing a secondary battery electrode, according to the present embodiment, is employed. When the hybrid drying system for manufacturing a secondary battery electrode, according to the present embodiment, is employed, unlike conventional methods, the agglomeration issue and the risk of explosion of a solvent component may be eliminoted or significantly reduced. In particular, high-speed drying for metal foil may be realized so that productivity may be improved.

The hybrid drying system for manufacturing a secondary battery electrode, according to the present embodiment, which may provide such an effect, includes a hot air drying furnace chamber 100 in which a unit mounting operation portion 130 is provided, and a structure, such as a roller 102, a hot air supply and exhaust portion 170, etc., is mounted, by location, in the hot air drying furnace chamber 100.

The hot air drying furnace chamber 100 forms a place for hot air drying of the slurry applied to the metal foil forming a secondary battery electrode. The length of the hot air drying furnace chamber 100 may be appropriately designed.

If the length of the hot air drying furnace chamber 100 is long, the structure, such as the roller 102, the hot air supply and exhaust portion 170, etc., may be arranged a little more, and if the length of the hot air drying furnace chamber 100 is short, the structure, such as the roller 102, the hot air supply and exhaust portion 170, etc., may arranged a little less. Accordingly, the length and the size of the hot air drying furnace chamber 100 may vary, without limit, from what is shown.

The hot air drying furnace chamber 100 may include a lower chamber 110 and an upper chamber 120 detachably coupled to an upper portion of the lower chamber 110. As the hot air drying furnace chamber 100 has a structure in which the upper chamber 120 is open, the structure, such as the roller 102, the hot air supply and exhaust portion 170, etc., may be installed in the lower chamber 110 and the upper chamber 120.

A sealing member 115 is arranged between the lower chamber 110 and the upper chamber 120. Accordingly, hot air does not escape out of the hot air drying furnace chamber 100.

A plurality of rollers 102 are arranged inside the hot air drying furnace chamber 100. The metal foil subject to drying is dried while moving inside the hot air drying furnace chamber 100 by the operation of the rollers 102. For entrance of the metal foil, a foil inlet 111, through which metal foil before drying is input, is formed in one side of the hot air drying furnace chamber 100, and a foil outlet 112, through which the metal foil that has been dried is discharged, is formed in the other side thereof. Although the foil inlet 111 and the foil outlet 112 are illustrated in the form of hole only in the drawings, a door for opening/closing the foil inlet 111 or the foil outlet 112 may be provided on a corresponding one of the foil inlet 111 and the foil outlet 112.

The hot air supply and exhaust portion 170 is provided in the hot air drying furnace chamber 100, and supplies hot air to the metal foil moving inside the hot air drying furnace chamber 100 to dry the metal foil and also exhausts the hot air used during drying. In other words, the metal foil is substantially dried by the hot air at high temperature by the operation of the hot air supply and exhaust portion 170.

The hot air supply and exhaust portion 170 includes a lower supply tank 171 arranged in the lower chamber 110 and including a lower hot air nozzle 172 for supplying hot air from below, a plurality of lower exhaust ducts 173 arranged around the lower supply tank 171 in the lower chamber 110 and exhausting the hot air in the lower chamber 110 toward the lower chamber 110, an upper supply tank 174 arranged in the upper chamber 120 and including an upper hot air nozzle 175 for supplying hot air from above, and a plurality of upper exhaust ducts 176 arranged around the upper supply tank 174 in the upper chamber 120 and exhausting the hot air in the upper chamber 120 toward the upper chamber 120.

In the present embodiment, the lower supply tank 171, the lower exhaust ducts 173, the upper supply tank 174, and the upper exhaust ducts 176 may each be provided in plurality inside the hot air drying furnace chamber 100. As described above, the numbers and the locations of the lower supply tank 171, the lower exhaust ducts 173, the upper supply tank 174, and the upper exhaust ducts 176 may vary, without limit, depending on the length and the size of the hot air drying furnace chamber 100.

Although, in the drawings, the sizes of the lower supply tanks 171 and the upper supply tanks 174 are illustrated to be different from each other, the lower supply tanks 171 and the upper supply tanks 174 may have the same size. Furthermore, the numbers of the lower hot air nozzles 172 and the upper hot air nozzles 175 respectively provided on the lower supply tanks 171 and the upper supply tanks 174 may differ from the drawings. Accordingly, the scope of the present inventive concept is not limited to the shape of the drawings.

Accordingly, when the metal foil is introduced into the hot air drying furnace chamber 100 through the foil inlet 111 and moved by the roller 102, as the hot air supply and exhaust portion 170 operates, that is, as an operation is performed in which hot air is supplied to the lower supply tanks 171 and the upper supply tanks 174 and the hot air that is slightly cooled by the lower exhaust ducts 173 and the upper exhaust ducts 176 is exhausted, the metal foil is dried at high temperature and then discharged through the foil outlet 112. A solvent generated during the drying of slurry is discharged through the lower exhaust ducts 173 and the upper exhaust ducts 176.

On the other hand, when the metal foil is dried at high temperature only by the operation of hot air, many problems, such as the agglomeration issue of a solvent component, as described above, may occur, and also the risk of explosion may increase.

Accordingly, in order to safely and stably perform a drying process for metal foil (Meta Foil) of a secondary battery electrode, in particular for a high-speed drying process, while eliminating or significantly reducing the agglomeration issue and risk of explosion of a solvent component, in the present system, the unit mounting operation portion 130 is applied to the hot air drying furnace chamber 100.

The unit mounting operation portion 130 is provided in an area of the upper chamber 120 of the hot air drying furnace chamber 100, and is a portion where a predetermined high-speed drying unit 10 performing the high-speed drying for metal foil in the hot air drying furnace chamber 100 is mounted and operates.

In the present embodiment, the unit mounting operation portion 130 is integrally provided in the upper chamber 120. The unit mounting operation portion 130 may include a unit mounting portion 140 provided in the hot air drying furnace chamber 100 and forming a place where the high-speed drying unit 10 is mounted, a heat source penetration window 150 provided on a wall body of the upper chamber 120 of the hot air drying furnace chamber 100 in the unit mounting portion 140 and guiding a heat source of the high-speed drying unit 10 toward the metal foil in the hot air drying furnace chamber 100, and an opening shield portion 145 that shields an opening of the unit external mounting portion 140.

The unit mounting portion 140 is provided in the upper chamber 120 and forms a place where the high-speed drying unit 10 is mounted. In the present embodiment, the unit mounting portion 140 is employed as the unit external mounting portion 140 that enables the high-speed drying unit 10 to be mounted outside the upper chamber 120. In other words, in the present embodiment, the unit external mounting portion 140 makes the high-speed drying unit 10 mounted outside the hot air drying furnace chamber 100. When the high-speed drying unit 10 is mounted outside the hot air drying furnace chamber 100, installed or maintenance/repair is made easy, and furthermore no damage to equipment exists.

The unit external mounting portion 140 may be formed by a portion processed in the form of groove toward the lower chamber 110 from the upper chamber 120. The high-speed drying unit 10 to be mounted in the unit external mounting portion 140 may include a NIR laser unit. However, as illustrated in FIG. 10, an intense pulsed light (IPL) unit may be a high-speed drying unit 20, or as illustrated in FIG. 11, an IR lamp unit may be a high-speed drying unit 30. Any of the units 10 to 30 employed in a state of being mounted in the unit external mounting portion 140 that is outside the upper chamber 120 dries the metal foil in the hot air drying furnace chamber 100 at high speed. Accordingly, the occurrence of the agglomeration issue of a solvent component may be prevented, and furthermore the risk of explosion may be eliminated. Also, drying at high-speed is possible so as to contribute to improvement of productivity.

The heat source penetration window 150 is provided to guide the heat source of the high-speed drying unit 10 mounted outside the hot air drying furnace chamber 100 into the hot air drying furnace chamber 100, that is, for operation of the high-speed drying unit 10 for high-speed drying. The heat source penetration window 150 is provided in the upper chamber 120 to neighbor the unit external mounting portion 140, and guides the heat source of the high-speed drying unit 10 to proceed toward the metal foil in the hot air drying furnace chamber 100.

The heat source penetration window 150 may include an inner window 151 that neighbors the metal foil in the hot air drying furnace chamber 100, an outer window 152 that forms a gap G with the inner window 151 and is arranged to neighbor the high-speed drying unit 10, and a window cap 153 that supports the inner and outer windows 151 and 152 to be coupled at corresponding positions. The inner window 151 and the outer window 152 may be special glass that is resistant to heat.

The opening shield portion 145 is a device for shieling the opening of the unit external mounting portion 140. Although schematically illustrated in the drawing for convenience, the opening shield portion 145 may detachably shield the opening of the unit external mounting portion 140 from outside the unit external mounting portion 140. As the opening shield portion 145 is opened when necessary, the installation and maintenance/repair of the high-speed drying unit 10 is possible.

Other than the above configurations, the unit mounting operation portion 130 further includes a cooling fluid flowing portion 160. The cooling fluid flowing portion 160 is connected to the heat source penetration window 150 in the upper chamber 120, and serves to flow a cooling fluid through the gap G between the inner and outer windows 151 and 152 forming the heat source penetration window 150. In other words, the cooling fluid flowing portion 160 is provided to shield a hot heat source. The cooling fluid may variously include air, water, a coolant, etc.

The cooling fluid flowing portion 160 includes a cooling fluid supply duct 161 connected to one side of the heat source penetration window 150 and supplying a cooling fluid through the gap G between the inner and outer windows 151 and 152 forming the heat source penetration window 150, and a cooling fluid discharge duct 162 connected to the other side of the heat source penetration window 150 and discharging the cooling fluid comping out from the gap G between the inner and outer windows 151 and 152 forming the heat source penetration window 150. The cooling fluid flowing portion 160 may further include a blower, an intake, etc. for supply and discharge of the cooling fluid.

On the other hand, a hybrid drying system for manufacturing a secondary battery electrode, according to the present embodiment, further include a system controller 190 for control of a system.

The system controller 190 controls, in an organic mechanism, the operations of the hot air supply and exhaust portion 170, the high-speed drying unit 10, and the cooling fluid flowing portion 160 for automatic progress of a drying process for metal foil inside the hot air drying furnace chamber 100.

The system controller 190 performing the above operation may include a central processing unit (CPU) 191, a memory 192, and a support circuit 193.

The CPU 191 may be one of various computer processors that are industrially applicable to control, in an organic mechanism, the operations of the hot air supply and exhaust portion 170, the high-speed drying unit 10, and the cooling fluid flowing portion 160, for automatic progress of a drying process for metal foil inside the hot air drying furnace chamber 100 in the present embodiment.

The memory 192 is connected to the CPU 191. The memory 192, which is a computer-readable recording medium, may be installed at a local or remote place, and may be at least one memory, for example, random access memory (RAM), ROM, floppy disk, hard disk, or a certain digital storage form, which is easily usable.

The support circuit 193 is coupled with the CPU 191 to support the typical operation of the processor. The support circuit 193 may include a cache, a power supply, a clock circuit, an input/output circuit, a subsystem, etc.

In the present embodiment, for automatic progress of a drying process for metal foil inside the hot air drying furnace chamber 100, the system controller 190 controls, in an organic mechanism, the operations of the hot air supply and exhaust portion 170, the high-speed drying unit 10, and the cooling fluid flowing portion 160, and a series of control processes may be stored in the memory 192. Typically, a software routine may be stored in the memory 192. The software routine may also be stored or executed by another central processing unit (not shown).

Although the process according to the present inventive concept is described as being executed by a software routine, at least some of the processes of the present inventive concept may be executed by hardware.

As such, the processes of the present inventive concept may be implemented by software executed on a computer system, hardware such as an integrated circuit, or a combination of software and hardware.

Hereinafter, the operation of the hybrid drying system for manufacturing a secondary battery electrode, according to the present embodiment, is described.

First, metal foil is introduced into the hot air drying furnace chamber 100 through the foil inlet 111, and then moved by the roller 102. In this state, the hot air supply and exhaust portion 170 operates. In other words, as hot air is supplied to the lower supply tanks 171 and the upper supply tanks 174 and the high-temperature drying of metal foil is performed. A solvent generated during the drying of slurry is discharged through the lower exhaust ducts 173 and the upper exhaust ducts 176.

On the other hand, the high-speed drying unit 10 operates along with the operation of the hot air supply and exhaust portion 170. In this state, as the high-speed drying unit 10 is arranged outside the hot air drying furnace chamber 100, the heat source generated from the high-speed drying unit 10 proceeds toward the metal foil in the hot air drying furnace chamber 100 through the heat source penetration window 150 to allow the metal foil to be dried at high speed.

As such, the metal foil that has been dried by the operation of the hot air supply and exhaust portion 170 and the operation of the high-speed drying unit 10 arranged outside the hot air drying furnace chamber 100 may be discharged through the foil outlet 112.

According to the present embodiment that operates with the structure described above, the drying process for metal foil (Meta Foil) of a secondary battery electrode may be safely and stably performed and may also implement high-speed drying, thereby improving productivity.

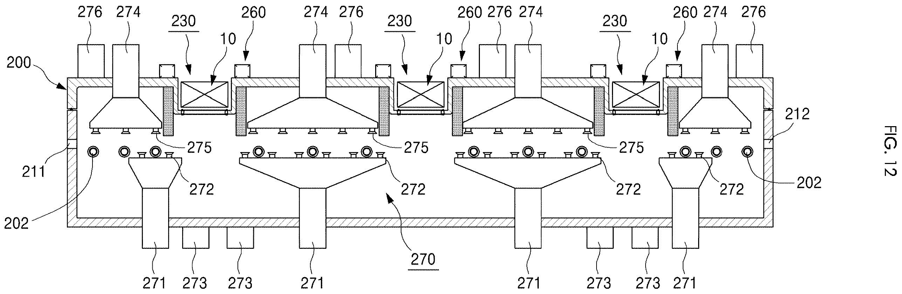

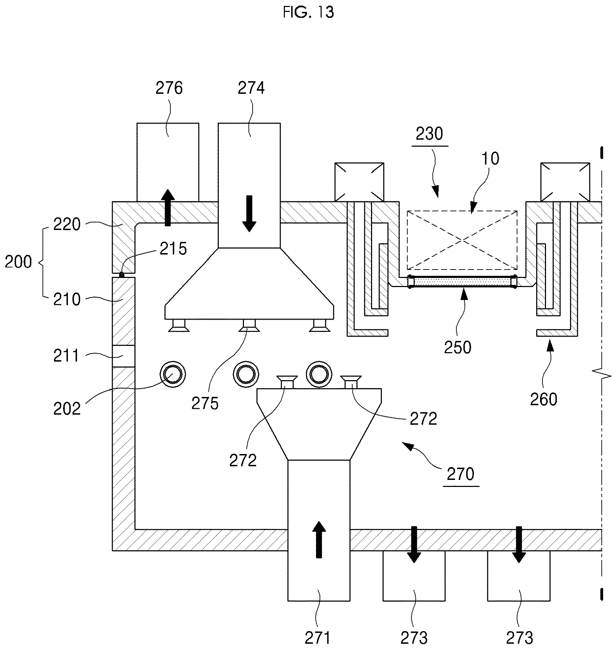

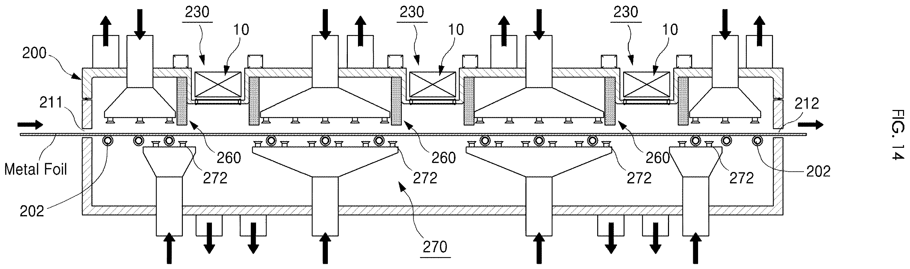

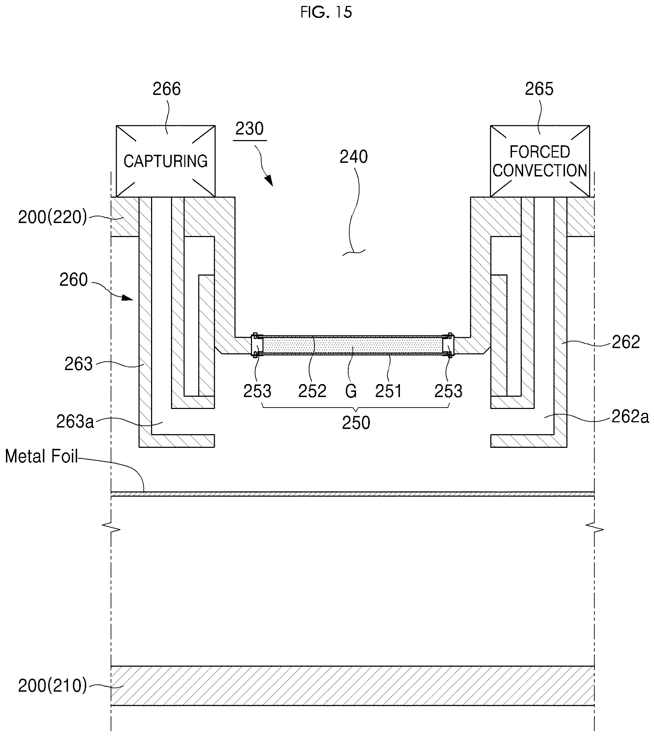

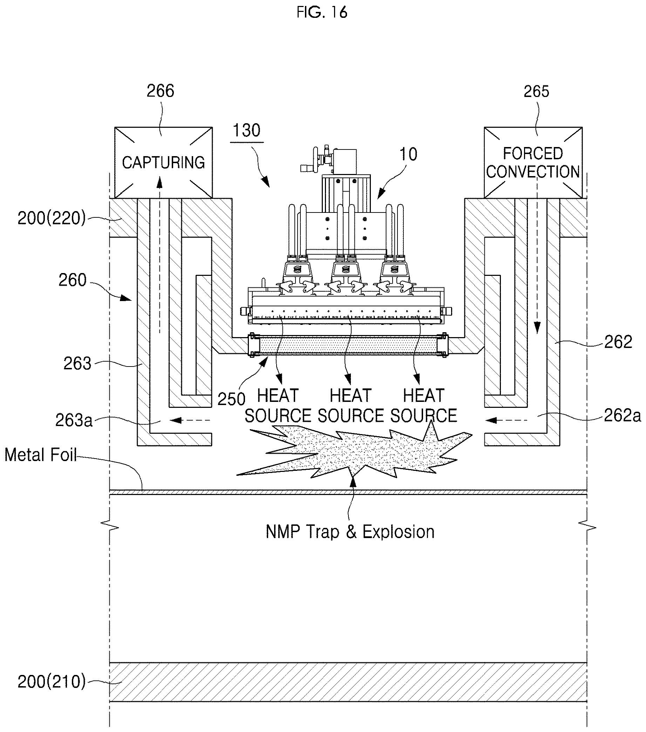

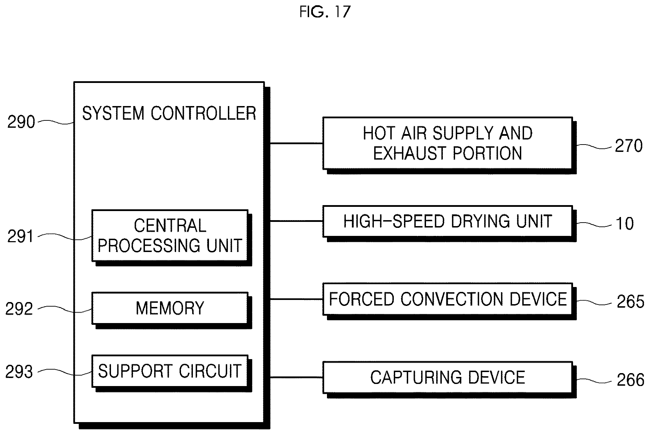

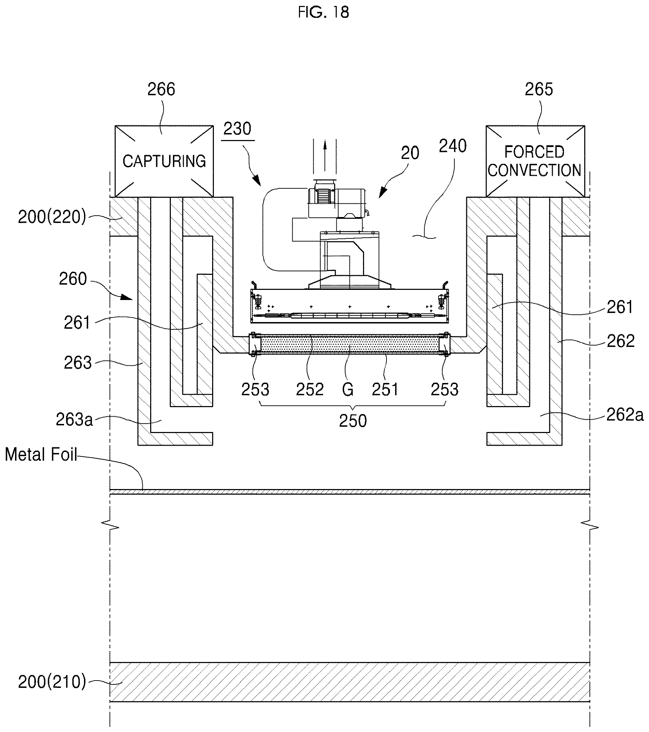

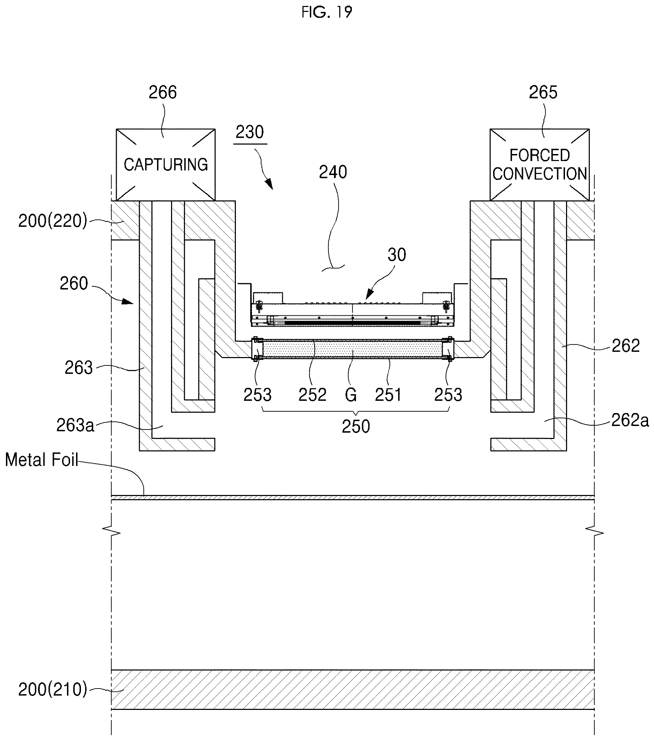

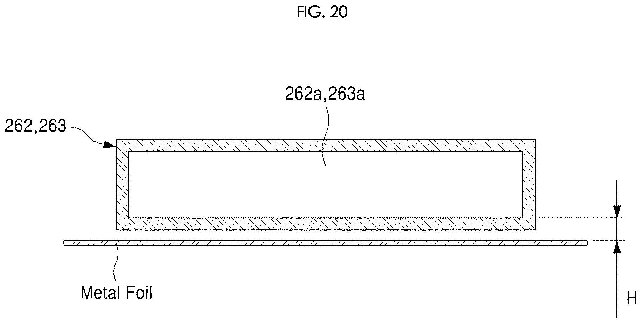

FIG. 12 is a configuration view of a hybrid drying system for manufacturing a secondary battery electrode, according to a second embodiment of the present inventive concept. FIG. 13 is an enlarged view of main parts of FIG. 12. FIG. 14 is a process diagram of FIG. 12. FIG. 15 is an enlarged view of main parts of FIG. 13, which is an enlarged view of a unit external mounting portion area. FIG. 16 is a process diagram showing that a high-speed drying unit is applied to FIG. 15. FIG. 17 is a control block diagram of the hybrid drying system for manufacturing a secondary battery electrode of FIG. 12. FIGS. 18 and 19 are different application examples of a high-speed drying unit. FIG. 20 is a cross-sectional structural view showing a flow path of first and second ducts.

Referring to the drawings, a hybrid drying system for manufacturing a secondary battery electrode, according to the present embodiment, unlike the embodiment described above, includes a hot air drying furnace chamber 200 in which a unit mounting operation portion 230 and an explosive substance forced discharge portion 260 are provided, and a structure, such as a roller 202, a hot air supply and exhaust portion 270, etc., is mounted in the hot air drying furnace chamber 200 by location. For reference, in the present embodiment, '2' is used before each reference numeral to distinguish the present embodiment from the embodiment described above. However, redundant descriptions of the same elements are omitted.

In particular, the hybrid drying system for manufacturing a secondary battery electrode, according to the present embodiment, may perform high-speed drying for metal foil (Meta Foil) of a secondary battery electrode while preventing the diffusion of an explosive substance and also eliminating or significantly reducing risk of explosion, thereby significantly increasing productivity compared to the convention technology. Here, the explosive substance means a solvent having an n-methyl pyrrolidone (NMP) component in the cathode material slurry as described above. Accordingly, in the following description, the explosive substance and NMP are described together.

As described above, the electrode process for manufacturing an electrode of a secondary battery is a series of manufacturing processes of applying electrode slurry mixed with an active material and a conductive agent onto a current collector that is a material of a metal component, drying the applied electrode slurry in a high temperature state, and pressing the dried slurry. Here, the current collector that is a material of a metal component corresponds to the metal foil in the present embodiment. The metal foil includes an aluminum (A) or copper (Cu) material.

The electrode slurry mixed with an active material and a conductive agent applied to the metal foil needs to be dried in a high temperature state. In this state, the hybrid drying system for manufacturing a secondary battery electrode, according to the present embodiment, is employed. When the hybrid drying system for manufacturing a secondary battery electrode, according to the present embodiment, is employed, diffusion of an explosive substance may be prevented so that risk of explosion may be eliminated or significantly reduced, and also high-speed drying of the metal foil of a secondary battery electrode may be performed, thereby improving productivity.

The hot air drying furnace chamber 200 may include a lower chamber 210 and an upper chamber 220 detachably coupled to an upper portion of the lower chamber 210. As the hot air drying furnace chamber 100 has a structure in which the upper chamber 220 is open, the structure, such as the roller 202, the hot air supply and exhaust portion 270, etc., may be installed in the lower chamber 210 and the upper chamber 220.

A sealing member 215 is arranged between the lower chamber 210 and the upper chamber 220. Accordingly, hot air does not escape outside of the hot air drying furnace chamber 200.

A plurality of rollers 202 are arranged inside the hot air drying furnace chamber 200. The metal foil subject to drying is dried while moving inside the hot air drying furnace chamber 200 by the operation of the rollers 202. For entrance of the metal foil, a foil inlet 211, through which metal foil before drying is input, is formed in one side of the hot air drying furnace chamber 200, and a foil outlet 212, through which the metal foil that has been dried is discharged, is formed in the other side thereof.

The hot air supply and exhaust portion 270 is provided in the hot air drying furnace chamber 200, and supplies hot air to the metal foil moving inside the hot air drying furnace chamber 200 to dry the metal foil and also exhausts the hot air used during drying. In other words, the metal foil is substantially dried by the hot air at high temperature by the operation of the hot air supply and exhaust portion 270. As the structure, function, and role of the hot air supply and exhaust portion 270 are the same as those of the embodiment described above, only reference numerals are distinguished and descriptions thereof are omitted.

When the metal foil is dried at high temperature only by the operation of hot air, many problems, such as the agglomeration issue of a solvent component, as described above, may occur, and also the risk of explosion may increase, thereby deteriorating productivity.

Accordingly, in order to safely and stably perform a drying process for metal foil (Meta Foil) of a secondary battery electrode, in particular a high-speed drying process, while eliminating or significantly reducing the agglomeration issue and risk of explosion of a solvent component, in the present system, the unit mounting operation portion 230 is applied to the hot air drying furnace chamber 200. The unit mounting operation portion 230 may include a unit external mounting portion 240 and a heat source penetration window 250.

On the other hand, the explosive substance forced discharge portion 260 is provided in an area of the unit mounting operation portion 230, and is a device for forcibly discharge an explosive substance that may be generated during high-speed drying for metal foil.

When the explosive substance may be forcibly discharged to the outside by the operation of the explosive substance forced discharge portion 260, as in the present embodiment, the high-speed drying for the metal foil of a secondary battery electrode may be performed while preventing the diffusion of an explosive substance and also eliminating or significantly reducing the risk of explosion.

The explosive substance forced discharge portion 260 may include a first duct 262 and a second duct 263 of a duct structure. The first duct 262 and the second duct 263 may be a symmetrical structure.

The first duct 262 is a duct that extends from one side area of the unit external mounting portion 240 toward the metal foil and then is bent in an end portion area parallel to the metal foil, and includes a first flow path 262a, along which air flows, formed therein.

The second duct 263 is a duct that extends from the other side area of the unit external mounting portion 240 toward the metal foil and then is bent in an end portion area parallel to the metal foil. In other words, in the present embodiment, the second duct 263 is provided symmetrically to the first duct 262, and includes a second flow path 263a, along which air flows, formed therein.

The first flow path 262a of the first duct 262 and the second flow path 263a of the second duct 263 are formed as an integrated opening. Accordingly, manufacturing thereof is convenient.

In addition to the first duct 262 and the second duct 263, the explosive substance forced discharge portion 260 further includes a forced convection device 265 connected to the first duct 262 and generating forced convection toward the first flow path 262a, and a capturing device 266 connected to the second duct 263 and capturing foreign materials in the air discharged through the second flow path 263a.

During the operations of the forced convection device 265 and the capturing device 266, forced convection is performed at a height that does not affect an electrode from the first flow path 262a of the first duct 262 through the second flow path 263a of the second duct 263 so that an explosive substance may be forcibly discharged to the outside. In other words, in the present embodiment, the first and second ducts 262 and 263 are installed on both sides of the unit external mounting portion 240 to introduce the external air so as to forcibly discharge NMP that is the explosive substance to the outside, thereby significantly reducing the risk of explosion. In this state, instead of performing convection in the entire area of the unit external mounting portion 240, it is preferable to install the first and second ducts 262 and 263 such that convection is performed at a height that does not affect the electrode.

On the other hand, a system controller 290 for control of a system is also applied to the hybrid drying system for manufacturing a secondary battery electrode, according to the present embodiment. The system controller 290 controls, in an organic mechanism, the operations of the hot air supply and exhaust portion 270, the high-speed drying unit 10, the forced convection device 265, and the capturing device 266, for automatic progress of a drying process for metal foil in the hot air drying furnace chamber 200. The system controller 290 performing such a role may include a central processing unit (CPU) 291, a memory 292, and a support circuit 293.

Hereinafter, the operation of the hybrid drying system for manufacturing a secondary battery electrode, according to the present embodiment, is described.

First, metal foil is introduced into the hot air drying furnace chamber 200 through the foil inlet 211 and then moved by the roller 202. In this state, the hot air supply and exhaust portion 270 operates. In other words, hot air is supplied to lower supply tanks 271 and upper supply tanks 274, and then high-temperature drying of metal foil is performed. A solvent generated during the drying of slurry is discharged through lower exhaust ducts 273 and upper exhaust ducts 276.

With the operation of the hot air supply and exhaust portion 270, the high-speed drying unit 10 operates. In this state, as the high-speed drying unit 10 is arranged outside the hot air drying furnace chamber 200, the heat source generated from the high-speed drying unit 10 proceeds toward the metal foil in the hot air drying furnace chamber 200 through the heat source penetration window 250 and contributes to high-speed drying of metal foil.

As such, by the operation of the hot air supply and exhaust portion 270 and the operation of the high-speed drying unit 10 arranged outside the hot air drying furnace chamber 200, the metal foil that has been dried may be discharged through the foil outlet 212.

On the other hand, in a case of the present embodiment, as the explosive substance forced discharge portion 260 is provided around the metal foil that neighbors the high-speed drying unit 10 so as to forcibly exhaust the explosive substance, during a high-speed drying process for metal foil, diffusion of the explosive substance may be prevented. Accordingly, risk of explosion may be significantly reduced.

According to the present embodiment that operates with the structure described above, high-speed drying for metal foil (Meta Foil) of a secondary battery electrode may be performed while preventing the diffusion of an explosive substance and also eliminating or significantly reducing the risk of explosion, thereby significantly increasing productivity compared to the convention technology.

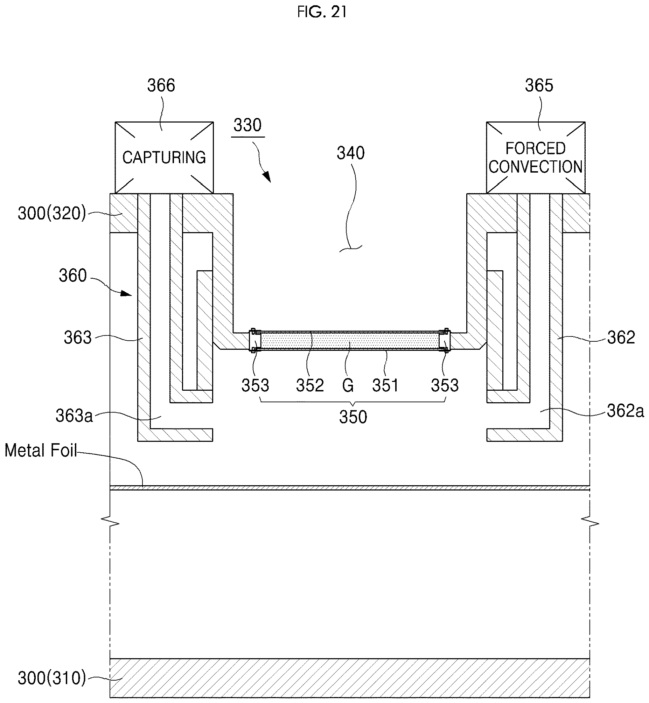

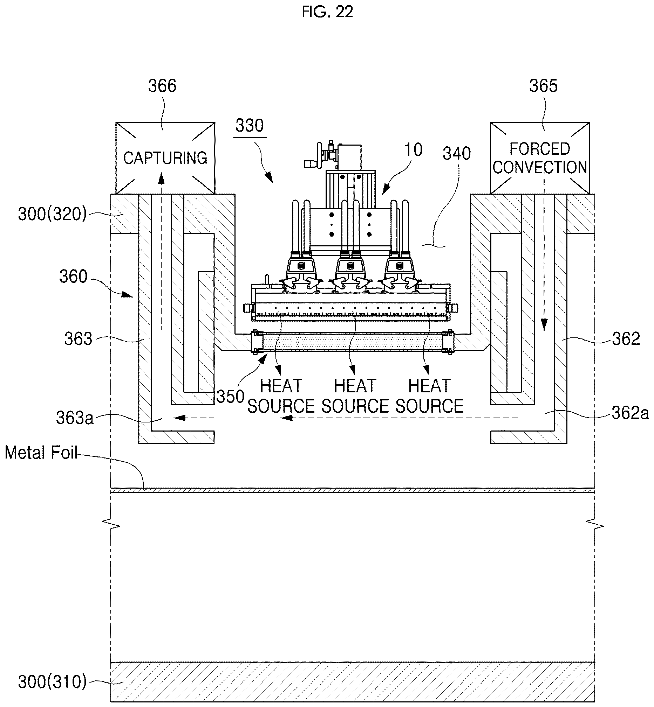

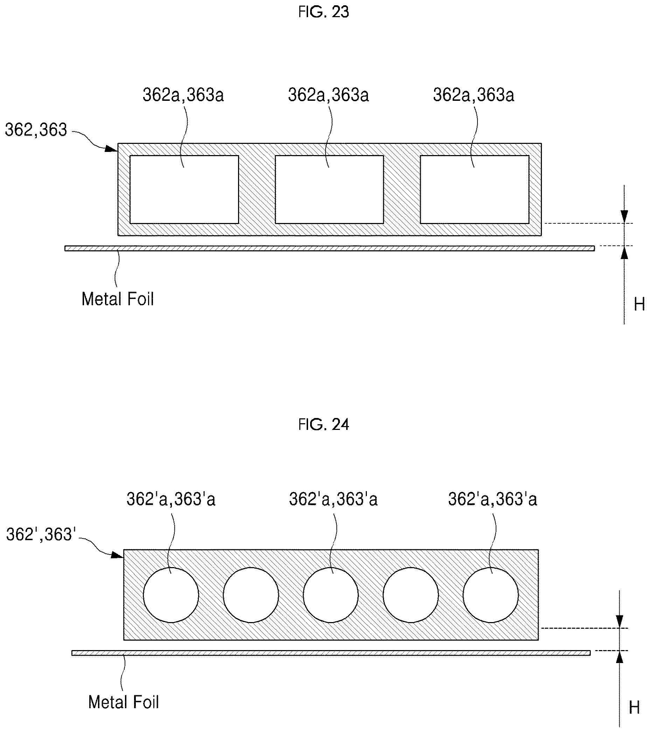

FIG. 21 is an enlarged view of a unit external mounting portion area in a hybrid drying system for manufacturing a secondary battery electrode, according to a third embodiment of the present inventive concept. FIG. 22 is a process diagram showing that the high-speed drying unit is applied to FIG. 21. FIG. 23 is a cross-sectional structural view showing a flow path of first and second ducts applied to FIG. 21. FIG. 24 illustrates a modified example of a flow path of first and second ducts illustrated in FIG. 23.

For reference, in the present embodiment, '3' is used before each reference numeral to distinguish the present embodiment from the embodiments described above. However, redundant descriptions of the same elements are omitted.

Referring to the drawings, an explosive substance forced discharge portion 360 is applied to the case of the present embodiment, and the explosive substance forced discharge portion 360 includes first and second ducts 362 and 363, a forced convection device 365, and a capturing device 366. The functions and roles thereof are the same as those in the embodiment described above. Accordingly, redundant descriptions thereof are omitted.

On the other hand, first and second flow paths 362a and 363a of first and second ducts 362 and 363 may be a plurality of separate openings having a rectangular cross-section, as illustrated in FIG. 23, or first and second flow paths 362'a and 363'a of first and second ducts 362' and 363' may be a plurality of separate openings having a circular cross-section, as illustrated in FIG. 24. Any shape may perform the same function as the embodiment described above.

Accordingly, when the forced convection device 365 and the capturing device 366 operate with the progress of process, forced convection may be performed at a height H that does not affect the electrode from the first flow path 362a of the first duct 362 through the second flow path 363a of the second duct 363. Accordingly, as the explosive substance is forcibly discharged to the outside, the risk of explosion may be eliminated or significantly reduced.

In the present embodiment, high-speed drying for metal foil (Meta Foil) of a secondary battery electrode may be performed while preventing diffusion of an explosive substance and eliminating or significantly reducing the risk of explosion, thereby significantly increasing productivity compared to the convention technology.

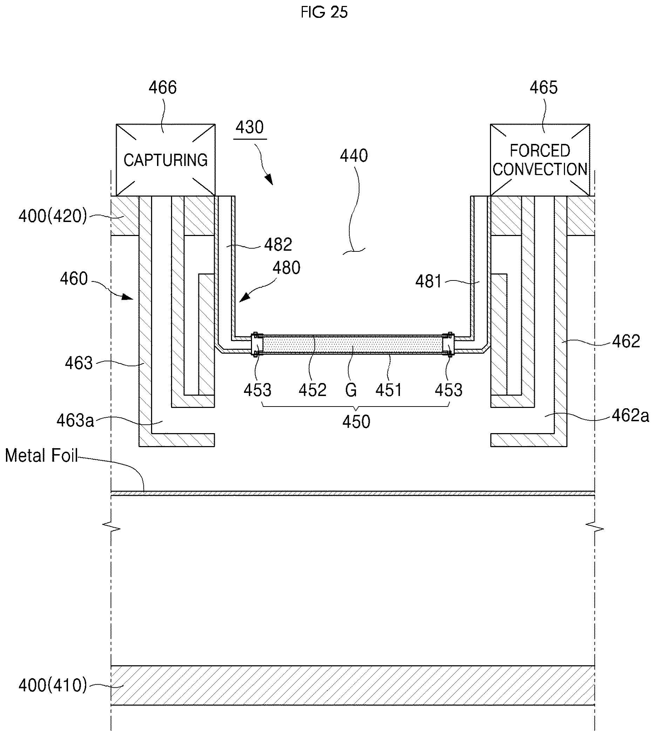

FIG. 25 is a structural view of a unit external mounting portion area in a hybrid drying system for manufacturing a secondary battery electrode, according to a fourth embodiment of the present inventive concept.

For reference, in the present embodiment, '4' is used before each reference numeral to distinguish the present embodiment from the embodiment described above. However, redundant descriptions of the same elements are omitted.

Referring to the drawing, in a case of the present embodiment, as an explosive substance forced discharge portion 460 having a structure as in the third embodiment is employed, an explosive substance is forcibly discharged to the outside so that diffusion of explosive substance may be prevented.

On the other hand, in addition to the above, in a case of the present embodiment, a cooling fluid flowing portion 480 is further applied to the area of a heat source penetration window 450. The cooling fluid flowing portion 480 is connected to the heat source penetration window 450 in an upper chamber 420, and allows a cooling fluid to flow through a gap G between inner and outer windows 451 and 452 forming the heat source penetration window 450. In other words, the cooling fluid flowing portion 480 is provided to block a hot heat source. The cooling fluid may variously include air, water, a coolant, etc.

The cooling fluid flowing portion 480 includes a cooling fluid supply duct 481 connected to one side of the heat source penetration window 450 and supplying the cooling fluid through the gap G between the inner and outer windows 451 and 452 forming the heat source penetration window 450, and a cooling fluid discharge duct 482 connected to the other side of the heat source penetration window 450 and discharging the cooling fluid coming out through the gap G between the inner and outer windows 451 and 452 forming the heat source penetration window 450. The cooling fluid flowing portion 470 may further include a blower, an intake, etc. for supply and discharge of the cooling fluid. It may be seen that all these items belong to the right scope of the present inventive concept.

In the present embodiment, high-speed drying for metal foil (Meta Foil) of a secondary battery electrode may be performed while preventing the diffusion of an explosive substance and also eliminating or significantly reducing the risk of explosion, thereby significantly increasing productivity compared to the convention technology.

As such, while this inventive concept has been particularly shown and described with reference to preferred embodiments thereof, it will be understood by those of ordinary skill in the art that various changes in form and details may be made therein without departing from the spirit and scope of the inventive concept as defined by the appended claims. Therefore, the scope of the inventive concept is defined not by the detailed description of the inventive concept but by the appended claims, and all differences within the scope will be construed as being included in the present inventive concept.

### INDUSTRIAL APPLICABILITY

The present inventive concept may be used in the field of manufacturing a secondary battery electrode.

## Claims

1. A hybrid drying system for manufacturing a secondary battery electrode, the hybrid drying system comprising:
a hot air drying furnace chamber forming a place for hot air drying of slurry applied to metal foil (Meta Foil) forming a secondary battery electrode;
a hot air supply and exhaust portion provided in the hot air drying furnace chamber, and supplying hot air to the metal foil moving inside the hot air drying furnace chamber to dry the metal foil and exhausting the hot air used during drying; and
a unit mounting operation portion provided in the hot air drying furnace chamber, wherein a predetermined high-speed drying unit performing high-speed drying for the metal foil in the hot air drying furnace chamber is mounted in the unit mounting operation portion and operates.

2. The hybrid drying system of claim 1, wherein
the unit mounting operation portion comprises
a unit mounting portion that is provided in the hot air drying furnace chamber and forms a place in which the high-speed drying unit is mounted.

3. The hybrid drying system of claim 2, wherein
the unit mounting portion comprises a unit external mounting portion that allows the high-speed drying unit to be mounted outside the hot air drying furnace chamber.

4. The hybrid drying system of claim 3, wherein
the unit mounting operation portion further comprises:
a heat source penetration window that is provided on a wall body of the hot air drying furnace chamber in the unit external mounting portion and guides α heat source of the high-speed drying unit to proceed toward the metal foil in the hot air drying furnace chamber; and
an opening shield portion that shields an opening of the unit external mounting portion.

5. The hybrid drying system of claim 4, wherein
the unit external mounting portion is formed by a portion processed in a form of groove in one side of the hot air drying furnace chamber, and
the opening shield portion detachably shields the opening of the unit external mounting portion from outside the unit external mounting portion.

6. The hybrid drying system of claim 4, wherein
the heat source penetration window comprises:
an inner window neighboring the metal foil in the hot air drying furnace chamber;
an outer window forming a gap with the inner window and arranged to neighbor the high-speed drying unit; and
a window cap supporting the inner window and the outer window to be coupled at corresponding positions.

7. The hybrid drying system of claim 4, wherein
the unit mounting operation portion further comprising
a cooling fluid flowing portion that is connected to the heat source penetration window in the hot air drying furnace chamber and allows a cooling fluid to flow through a gap between the inner and outer windows that form the heat source penetration window.

8. The hybrid drying system of claim 7, wherein
the cooling fluid flowing portion comprises:
a cooling fluid supply duct connected to one side of the heat source penetration window and supplying the cooling fluid through the gap between the inner and outer windows that form the heat source penetration window; and
a cooling fluid discharge duct connected to the other side of the heat source penetration window and discharging the cooling fluid coming out through the gap between the inner and outer windows that form the heat source penetration window.

9. The hybrid drying system of claim 1, wherein
the hot air drying furnace chamber comprises:
a lower chamber; and
an upper chamber detachably coupled to an upper portion of the lower chamber,
the unit mounting operation portion is provided in the upper chamber, and
a plurality of rollers arranged in the hot air drying furnace chamber and moving the metal foil.

10. The hybrid drying system of claim 9, wherein
the hot air supply and exhaust portion comprises:
a lower supply tank arranged in the lower chamber and including a lower hot air nozzle through which hot air is supplied from below;
a plurality of lower exhaust ducts arranged around the lower supply tank in the lower chamber and exhausting the hot air in the lower chamber toward the lower chamber;
an upper supply tank arranged in the upper chamber and including an upper hot air nozzle through which hot air is supplied from above; and
a plurality of upper exhaust ducts arranged around the upper supply tank in the upper chamber and exhausting the hot air in the upper chamber toward the upper chamber.

11. The hybrid drying system of claim 10, wherein
the lower supply tank, the lower exhaust ducts, the upper supply tank, and the upper exhaust ducts are each arranged in plural numbers in the hot air drying furnace chamber, and
a foil inlet, through which the metal foil before drying is input, is formed in one side of the hot air drying furnace chamber and a foil outlet, through which the metal foil that has been dried is discharged, is formed in the other side thereof.

12. The hybrid drying system of claim 1, further comprising
a system controller configured to control, in an organic mechanism, operations of the hot air supply and exhaust portion and the high-speed drying unit, for automatic progress of a drying process for the metal foil in the hot air drying furnace chamber.

13. The hybrid drying system of claim 1, wherein
the high-speed drying unit is selected from among an NIR laser unit, an intense pulsed light (IPL) unit, and an IR lamp unit.

14. The hybrid drying system of claim 2, further comprising
an explosive substance forced discharge portion that is provided in an area of the unit mounting operation portion and forcibly discharges, to outside, an explosive substance generated during the high-speed drying for metal foil.

15. The hybrid drying system of claim 14, wherein
the explosive substance forced discharge portion comprises:
a first duct extending from one side area of the unit mounting portion toward the metal foil and then bent in an end portion area parallel to the metal foil, and including a first flow path, along which air flows, formed therein; and
a second duct provided symmetrically to the first duct in the other side area of the unit mounting portion, and including a second flow path, along which air flows, formed therein.

16. The hybrid drying system of claim 15, wherein
the first flow path or the second flow path is formed as an integrated opening.

17. The hybrid drying system of claim 15, wherein
the explosive substance forced discharge portion further comprises a forced convection device that is connected to the first duct and generates forced convection toward the first flow path.

18. The hybrid drying system of claim 17, wherein
the explosive substance forced discharge portion further comprises a capturing device that is connected to the second duct and captures foreign materials in air discharged through the second flow path.

19. The hybrid drying system of claim 18, wherein,
during operations of the forced convection device and the capturing device, forced convection is performed at a height that does not affect an electrode from the first flow path of the first duct through the second flow path of the second duct so that the explosive substance is forcibly discharged to outside.

20. The hybrid drying system of claim 20, wherein
the slurry includes cathode material slurry.
